# EUROPEAN PATENT SPECIFICATION

(11) **EP 1 470 030 B1**
(45) Date of publication and mention of the grant of the patent: **04.10.2006**
(21) Application number: 03701606.0
(22) Date of filing: 27.01.2003
(51) Int. Cl.: B60R 25/00, E05B 67/38

(54) **VEHICLE SECURITY DEVICE**
FAHRZEUGSICHERUNGSEINRICHTUNG
DISPOSITIF DE SECURITE POUR VEHICULE

(30) Priority: 28.01.2002 GB 0201873
(43) Date of publication of application: 27.10.2004
(73) Proprietor: Jones, John Edwin James, Oxon OX16 1XQ (GB); Jones, Deborah Jane, Oxon OX16 1XQ (GB)
(72) Inventor: Jones, John Edwin James, Oxon OX16 1XQ (GB); Jones, Deborah Jane, Oxon OX16 1XQ (GB)
(74) Representative: Rock, Olaf Colin
(86) International application number: PCT/GB2003/000326
(87) International publication number: WO 2003/064223

(56) References cited:
- DE-U- 9 213 108
- FR-A- 2 726 844
- US-A- 5 842 359
- US-A- 5 969 433
- US-A- 6 058 745
- US-A- 6 150 926

## Description

### TECHNICAL FIELD

This invention relates to a security device. It is particularly concerned with the security of a road vehicle. However the device is applicable to vehicles other than road vehicles as will become apparent.

### BACKGROUND ART

The present invention is concerned with preventing unauthorised access to door handles or key holes provided on doors to govern access to an interior of, for example, a vehicle though the invention is not limited to vehicle doors. In connection with motor vehicles it is known to bodily remove a lock from its housing by powerful, but portable, withdrawal means using leverage or hydraulic power.

FR-A-2 726 844 describes a security device for a member, such as a door, displaceable between a closed and an open position relative to a frame, the device providing for the blocking of access to an operating means for the member, such as a key entry, the device comprising
- an anchorage which is mounted at a working location on the member, the working location being in the vicinity of the operating means,
- a padlock for attachment to the anchorage, and
- a housing for attachment to the anchorage by way of the padlock when the anchorage is mounted on the member in the working location so that the housing extends to cover the operating means, the housing including
- a recess to receive the padlock so that the padlock is shrouded by the housing,
- means for securing the padlock to the housing when the padlock is located in the recess,
- means for accessing an operating means, such as a key hole, for the padlock when shrouded by the housing, to enable the padlock, when secured in the recess, to demountably retain the combined housing and padlock to the anchorage.

In my co-pending Application GB 00 26309.5 there is described a vehicle security device serving to resist unauthorised entry to the interior of a vehicle through a window opening.

The present invention can be used in combination with the device of the earlier application to provide for increased security.

### DISCLOSURE OF INVENTION

According to the present invention there is provided a security device as defined in claim 1.

According to a first preferred version of the present invention the device is further characterised by detector means for generating an alarm in the event that an unauthorised attempt is made to remove the device from a working location.

According to a further version of the first preferred version the device is further characterised in that the detector means includes a movement or impact sensitive device which, on triggering, causes a local alarm to be generated and/or transmits an alarm signal to a receiver at a local or remote location.

### BRIEF DESCRIPTION OF DRAWINGS

An exemplary embodiment of the invention will now be described with reference to the accompanying drawings of which:
Figure 1 is a perspective view of a vehicle door;
Figure 2 shows a first component of the security device viewed from the rear;
Figure 2A shows the component of Figure 2 vied from the front;
Figure 3 shows a second component of the security device from the side;
Figure 3A shows the component of Figure 3 viewed from the front;
Figure 4 shows a housing for the security device viewed from the side; and
Figure 4A shows the component of Figure 4 in enlarged form.

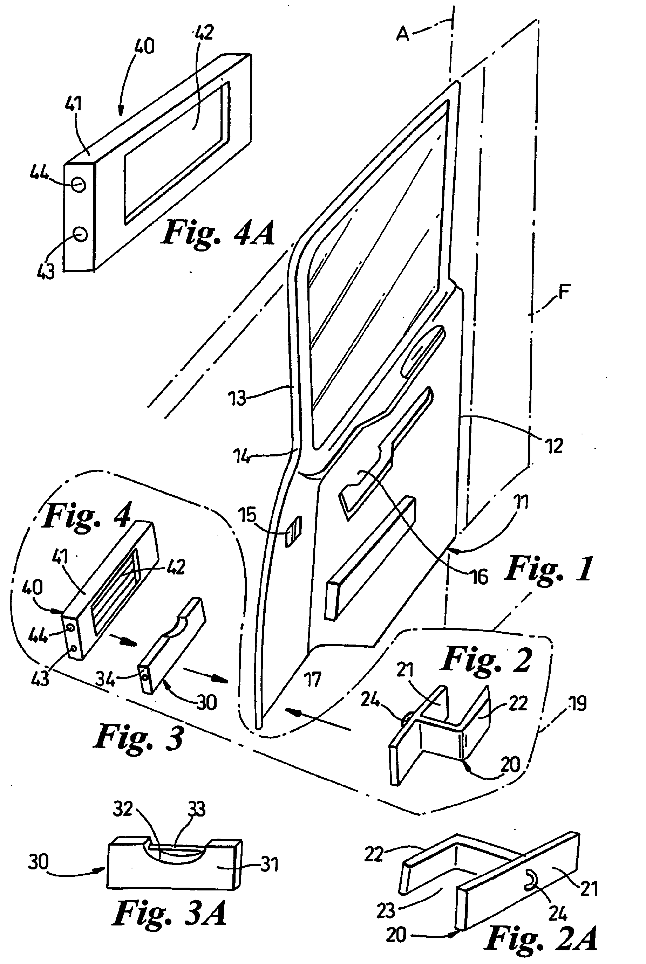

Figures 1, 2, 3 and 4 are disposed relative to one another to show an exploded view of the security device.

### MODE FOR CARRYING OUT THE INVENTION

A goods vehicle has a cab equipped with a door 11 mounted on frame P shown in broken outline. The door 11 is hinged towards its leading edge 12 in a conventional manner to rotate about axis A between a dosed position (as shown) and an open position allowing access to the cab. Rear edge 13 of the door 11 includes a rim 14. A conventional latch 15 is mounted towards the rear edge 13 of the door which can be opened form the inside of the vehicle by means of a handle 16, Outside panel 17 of the door 11 is provided with an external key hole and handle. A key inserted into the key hole can be used to lock operation of the latch and handle to maintain the door 11 in a closed position. Adjacent the external keyhole (not shown) there is a conventional external door handle in the form of a recessed flap. The door 11 is shown in its closed position lying flush with body frame F.

Security device 19 of the present invention is made up of three parts: anchorage 20 (Figures 2, 2A); padlock 30 (Figures 3. 3A) and housing 40.(Figures 4, 4A).

Anchorage 20 (Figure 2, 2A) is made up of a steel front flat plate 21 to which is welded an L-shaped steel plate 22 to form a crutch 23 by means of which the anchorage 20 can be mounted on the rear edge 13 of the door in the vicinity of the external keyhole and door handle. The anchorage 20 includes a strong integral loop 24.

Padlock 30 (Figures 3. 3A) is made up of a rectangular section body 31 having a recess 32 across which extends bar 33. The bar 33 can be locked and unlocked by way of a key inserted in keyhole 34 (Figure 4A). When unlocked the bar 33 retracts part way back across the recess 32 to release anything retained in the recess 32.

Housing 40 (Figures 4, 4A) is made up of a solid body member 41 with a recess 42 of sufficient size to receive and shroud security padlock 30. Bore 43 serves to receive a security bolt whereby the padlock can be secured within the recess 42 in a housed position in which bore 44 provides access to key hole 34 of the padlock.

The security device 19 is readily mounted on door 11. The door 11 is opened and anchorage 20 is presented to the door so that crutch 23 seats about rim 14 with the loop 24 on the outside of the door panel 17. The door 11 is then closed and locked by way of its existing lock. The padlock 30 is then attached to the loop 24 so that the loop is retained in recess 32 by bar 33. The housing 40 is then located over the padlock 30 so that the padlock 30 is enclosed by the recess 42 and with the housing 40 serving to shroud the external handle and keyhole of the door 11. The padlock 30 is secured in the recess 42 of the housing by a security bolt inserted into bore 43. The padlock is then unlocked or locked by inserting a key for the padlock into bore 44.

### INDUSTRIAL APPLICABILITY

The security device 19 provides an effective means for preventing unauthorised access to a vehicle door keyhole (and also the outside handle). The exemplary embodiment describes a security device for use with a goods vehicle door, In substantially similar form the device can be used not only on doors of goods, passenger vehicles and cars and but also on boots or bonnets of such vehicles. The device can be used in a similar way on other vehicles such as boats or aircraft. The device can also be used for static applications such as gates, cabinets, storage enclosures, kiosks, garages or buildings.

The housing 40 can include means for generating an alarm in the event that an unauthorised attempt is made to remove the device 19. Typically this could be a movement or impact sensitive means which, if triggered, could cause a local alarm to be generated and/or transmit a warning signal to a receiver at a local or remote security center.

## Claims

1. A security device for a member, such as a door, displaceable between a closed and an open position relative to a frame, the device providing for the blocking of access to an operating means for the member, such as a handle or key entry; the device comprising :
an anchorage (20) incorporating a crutch (23) by means of which, with the member (11) in an open position, the anchorage (20) can be demountably mounted at a working location on the member (11) with a rim (14) of the member (11) extending into the crutch (23); the working location being in the vicinity of the operating means;
a padlock (30) for attachment to the anchorage (20); and
a housing (40) for attachment to the anchorage (20) by way of the padlock (30) when the anchorage (20) is mounted on the member (11) in the working location so that the housing (40) extends to cover the operating means; the housing (40) including
a recess (42) to receive the padlock (30) so that the padlock (30) is shrouded by the housing (40);
means for securing the padlock (30) to the housing (40) when the padlock (30) is located in the recess (42);
means for accessing an operating means, such as a key hole (44), for the padlock (30) when shrouded by the housing (40); to enable the padlock (30), when secured in the recess (42), to demountably retain the combined housing (40) and padlock (30) to the anchorage (20).

2. A security device as claimed in Claim 1 **characterised by** detector means for generating an alarm in the event that an unauthorised attempt is made to remove the device from a working location.

3. A security device as claimed in Claim 2 **characterised in that** the detector means includes a movement or impact sensitive device which, on triggering, causes a local alarm to be generated and/or transmits an alarm signal to a receiver at a local or remote location.

## Patentansprüche

1. Sicherungsvorrichtung für ein Element, wie z.B. eine Tür, das sich zwischen einer geschlossenen Stellung und einer geöffneten Stellung bewegen lässt, wobei die Vorrichtung das Blockieren des Zugangs zu einer Betätigungseinrichtung für das Element, wie z.B. einer Handhabe oder einem Schlüsselzugang, besorgt und wobei die Vorrichtung Folgendes aufweist:
eine Verankerung (20) mit einem Zwischenstück (23), durch das die Verankerung (20), wenn sich das Element (11) in einer geöffneten Stellung befindet, an einem Funktionsort an dem Element (11) lösbar anbringbar ist, wobei sich ein Rand (14) des Elements (11) in das Zwischenstück (23) hinein erstreckt; wobei sich der Funktionsort in der Nähe der Betätigungseinrichtung befindet;
ein Hängeschloss (30) zur Anbringung an der Verankerung (20): und
eine Gehäuse (40) zum Anbringen an der Verankerung (20) mittels des Hängeschlosses (30), wenn die Verankerung (20) an dem Funktionsort an dem Element (11) angebracht ist, so dass das Gehäuse (40) die Betätigungseinrichtung verdeckt; wobei das Gehäuse (40) Folgendes aufweist:
eine Aussparung (42) zum Aufnehmen des Hängeschlosses (30) in einer derartigen Weise, dass das Hängeschloss (30) von dem Gehäuse (40) überdeckt ist;
eine Einrichtung zum Festlegen des Hängeschlosses (30) an dem Gehäuse (40), wenn sich das Hängeschloss (30) in der Aussparung (42) befindet:
eine Einrichtung zum Zugreifen auf eine Betätigungseinrichtung, wie z.B. ein Schlüsselloch (44), für das Hängeschloss (30), wenn dieses von dem Gehäuse (40) überdeckt ist, um das Hängeschloss (30) bei festgelegtem Zustand in der Aussparung (42) in die Lage zu versetzen, die kombinierte Einheit aus Gehäuse (40) und Hängeschloss (30) in lösbarer Weise an der Verankerung (20) festzuhalten.

2. Sicherungsvorrichtung nach Anspruch 1,
**gekennzeichnet durch** eine Detektoreinrichtung zum Erzeugen eines Alarms in dem Fall, dass ein nicht autorisierter Versuch zum Entfernen der Vorrichtung von einem Funktionsort unternommen wird.

3. Sicherungsvorrichtung nach Anspruch 2,
**dadurch gekennzeichnet, dass** die Detektoreinrichtung eine auf Bewegung oder Stoß ansprechende Einrichtung beinhaltet, die bei Auslösung die Erzeugung eines lokalen Alarms veranlasst und/oder ein Alarmsignal an einen Empfänger an einer Stelle in der Nähe oder an einem entfernten Ort sendet.

## Revendications

1. Dispositif de sécurité pour un élément, tel une porte, pouvant être déplacé entre une position fermée et une position ouverte par rapport à un cadre, le dispositif étant prévu pour bloquer l'accès à des moyens de fonctionnement de l'élément, tels une poignée ou une entrée de clé; le dispositif comprenant :
un ancrage (20) incorporant une béquille (23) au moyen de laquelle, à l'aide de l'élément (11) en position ouverte, l'ancrage (20) peut être monté de manière amovible au niveau d'un emplacement de travail sur l'élément (11) à l'aide d'un bord (14) de l'élément (11) s'étendant à l'intérieur de la béquille (23); l'emplacement de travail étant à proximité des moyens de fonctionnement ;
un cadenas (30) pour la fixation sur l'ancrage (20) et;
un boîtier (40) pour la fixation sur l'ancrage (20) à l'aide du cadenas (30) lorsque l'ancrage (20) est monté sur l'élément (11) dans l'emplacement de travail, de sorte que le boîtier (40) s'étende pour couvrir les moyens de fonctionnement ; le boîtier (40) incluant :
un évidement (42) pour recevoir le cadenas (30), de sorte que le cadenas (30) soit enveloppé par le boîtier (40) ;
des moyens pour fixer le cadenas (30) sur le boîtier (40) lorsque le cadenas (30) est situé dans l'évidement (42) ; des moyens pour accéder à un moyen de fonctionnement, tel un trou de clé (44), pour le cadenas (30) lorsque celui-ci est enveloppé par le boîtier (40); afin de permettre au cadenas (30), lorsque fixé dans l'évidement (42), de retenir de manière amovible le boîtier (40) et le cadenas (30) combinés sur l'ancrage (20).

2. Dispositif de sécurité selon la revendication 1, **caractérisé par** des moyens de détection destinés à générer une alarme lorsqu'une utilisation non autorisée est effectuée pour enlever le dispositif de l'emplacement de travail.

3. Dispositif de sécurité selon la revendication 2, **caractérisé en ce que** les moyens de détection comportent un dispositif sensible au mouvement ou aux impacts, lequel, en se déclenchant, entraîne la génération d'une alarme locale et/ou transmet un signal d'alarme à un récepteur se trouvant à un emplacement local ou à distance.
